Europäisches Patentamt

European Patent Office

Office européen des brevets

(19)

(11) Publication number: **0 315 602**
**A1**

# (12) EUROPEAN PATENT APPLICATION

(21) Application number: **88830464.9**

(22) Date of filing: **31.10.88**

(51) Int. Cl.⁴: **A 01 D 34/73**

(30) Priority: **04.11.87 IT 1178787**

(43) Date of publication of application:
**10.05.89 Bulletin 89/19**

(84) Designated Contracting States:
**AT BE CH DE ES FR GB GR LI NL**

(71) Applicant: **Calcinai, Maria Rosa**
**Via Molino n. 18**
**Montanino-Fraz.Com.Reggello Firenze (IT)**

(72) Inventor: **Calcinai, Maria Rosa**
**Via Molino n. 18**
**Montanino-Fraz.Com.Reggello Firenze (IT)**

(74) Representative: **Mannucci, Gianfranco, Dott.-Ing.**
**Ufficio Tecnico Ing. A. Mannucci Via della Scala 4**
**I-50123 Firenze (IT)**

(54) **Rotor with blades for grass-cutter mowing machines and similar, fabricated in a single piece forming blades and hub for insertion of shaft.**

㊼ A rotor with blades for moving machines o the grass-cutter type and similar, fabricated in a single piece of molded synthetic resin comprising the laminar part (1) of the blades and the hub (3) with a central seating (35) for insertion of the drive shaft.

Fig.1

EP 0 315 602 A1

**Description**

**"ROTOR WITH BLADES FOR GRASS-CUTTER MOWING MACHINES AND SIMILAR, FABRICATED IN A SINGLE PIECE FORMING BLADES AND HUB FOR INSERTION OF SHAFT"**

The subject of the invention is a rotor with blades for mowing machines of the grass-cutter type and similar, fabricated in a single piece in molded synthetic resin, comprising the laminar part of the blades and the hub, with central seating for insertion of the drive shaft.

The hub can be designed with a shell structure with reinforcing fins between shell and central seating.

In one practical embodiment, there extends upwards from the laminar part of the blades - in the operating position - a shell in the form of a truncated cone, or tapered in any way , in which the central seating is extended, with opening at the top; the hub thus formed is reinfor-ced by fins extending between the central seating and the shell in the downwards opening cavity between shell and seating.

The laminar part can be fitted with stiffening ribs between hub and blade parts; said ribs can be hollow.

The laminar part of the blades can also be curved in appearance, to increase their resistance through their shape.

This arrangement simplifies fabrication, and makes both for a lighter rotor assembly and for greater safety as regards the possibility of damage, of the kind that can be caused by a metal blade, to footwear, for example, any damage that might occur being far less in the case of a blade made of synthetic resinous material. Besides this, a blade fabricated of such material can, following a violent impact, become deformed without actually breaking, and, even if it does break, less damage will be caused by the fragments propelled outwards by centrifugal force. Moreover, this type of blade, made of good quality thermo-plastic material, can be as fully resistant, and possess just as much cutting power, as a metal blade, and moreover can also last longer than a metal blade unless this is made of a high-grade metal that has been tempered or specially treated in some other way, but this again makes the blade dangerously brittle. In short, the lower cost, greater ease of fabrication, improved safety and the other advantages make it worthwhile to substitute this kind of rotor for the traditional rotor with metal blades.

The drawings illustrate one possible method of putting the invention into effect: in detail,

Fig. 1 is an exploded sectional side view;

Figs. 2 and 3 are respectively a view from below and a view from above;

Figs. 4 and 5 illustrate two possible solutions for the blade section.

As illustrated by the attached drawings, the laminated part 1 comprising the cutting edges of the blades and the central hub 3 form a single piece. The hub exhibits an external shell structure in the form of a truncated cone 31, from the lesser base of which there extends a unit 33 constituting the seating 35 for the hub for rotary drive of the rotor; assembly is effected by means of axial-screw systems, such as that of a bolt 5 passing through an axial hole in the seating 35; the seating 35 also exhibits a cavity for a key for angular attachment to the end 9 of the drive shaft. Inside the shell 31, between the latter and the unit 33, there are fin attachments 37 for purposes of reinforcement, providing sufficient rigidity without any increase in thickness and with minimum material weights, as well as without risk of the pressed piece becoming deformed in cooling.

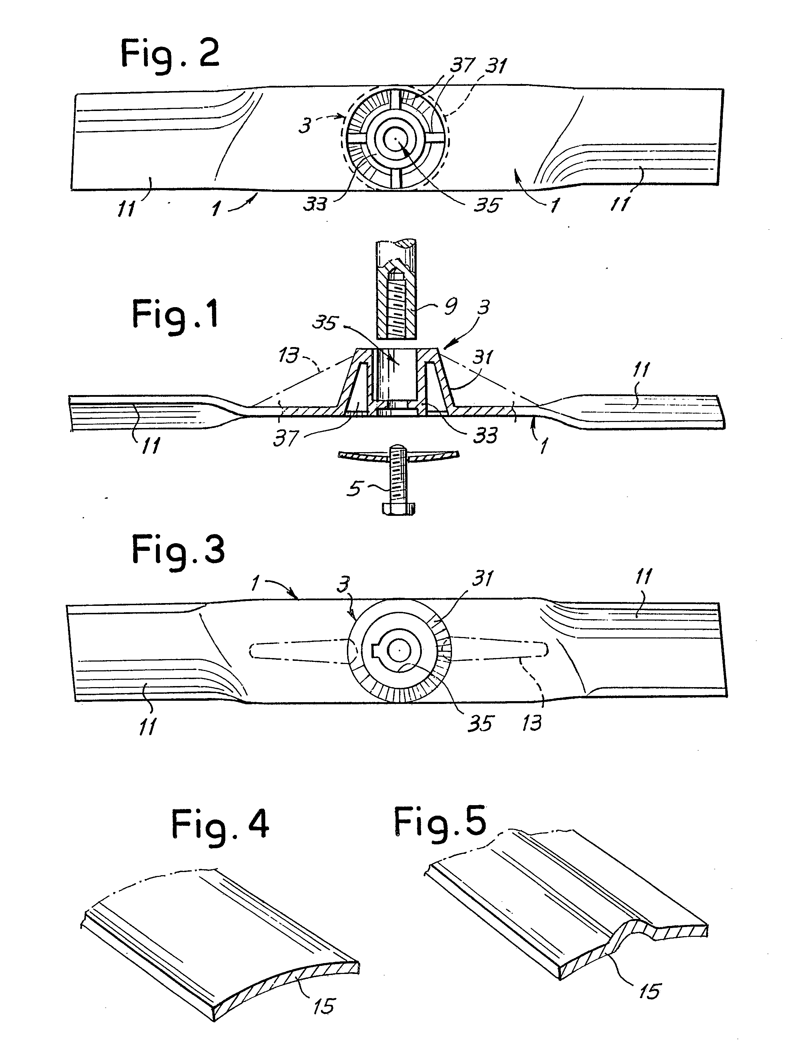

The blades have a sharp edge, imparted directly by the pressing process, and. can have their end deformed for propulsion of the cut grass; they can also be fitted with ribs 13 for the purpose of attachment to the shell 31 and of reinforcement; the ribs 13 can be hollow at the bottom in the interests of deformation and lightness of weight. Further, the blades can be slightly curved, as indicated by the numeral 15 in Figs. 4 and 5.

**Claims**

1. A rotor with blades for mowing machines of the grass cutter type and similar, fabricated in a single piece of molded synthetic resin, comprising the laminar part (1) of the blade and the hub (3), with central seating (35) for insertion of the drive shaft (9).

2. A rotor as claimed in claim 1, wherein the hub is designed with a shell structure (31) with reinforcing fins (37) between shell (31) and a unit (33) forming the central seating (35).

3. A rotor as claimed in claim 1 or 2, wherein there extends upwards from the laminar part (1) of the blades - in the operating position - a shell (31) in the form of a truncated cone, or tapered in any way, in which the central seating (35) is extended, with opening at the top; the hub (3) thus formed being reinforced by fins (37) extending between the unit (33) of the central seating (35) and the shell (31) in the downwards opening cavity between shell (31) and unit (33).

4. A rotor as claimed in any of claims 1, 2 or 3, comprising stiffening ribs (13) between hub (3) and blades (1).

5. A rotor as claimed in claim 1, wherein the laminar part of the blades is curved in appearance, to increase their resistance through their shape.

6. A rotor as claimed in claim 4, wherein the stiffening ribs (13) are hollow.

Fig.2

Fig.1

Fig.3

Fig.4

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | FR-A-2370419 (BERNARD MOTEURS) <br> * page 3, line 2 - page 3, line 9 * <br> * page 4, line 12 - page 4, line 21 * <br> * page 6, line 21 - page 7, line 4; claim 10; figure 11 * | 1 | A01D34/73 |
| A | | 3, 5 | |
| X | EP-A-27728 (BONFORTE) <br> * page 3, line 1 - page 6, line 14 * | 1 | |
| X | US-A-4250621 (HOULE) <br> * column 3, line 48 - column 3, line 62 * | 1 | |
| X | US-A-4250622 (HOULE) <br> * column 3, line 6 - column 3, line 33 * | 1 | |
| A | GB-A-2143716 (QUALCAST) <br> * page 1, line 93 - page 1, line 112; figure 2 * | 2, 3 | |
| A | US-A-3910017 (THORUD) <br> * column 2, line 37 - column 2, line 50 * | 4, 6 | TECHNICAL FIELDS SEARCHED (Int. Cl.4 ) |
| A | FR-A-2269851 (INTERNATIONAL HARVESTER FRANCE) <br> * page 5, line 34 - page 5, line 40; figure 9 * | 5 | A01D |
| A | US-A-4651510 (MALUTICH) | | |
| A | US-A-3465508 (EDWARDS) | | |

The present search report has been drawn up for all claims

| Place of search | Date of completion of the search | Examiner |
|---|---|---|
| THE HAGUE | 12 JANUARY 1989 | DE LAMEILLIEURE D. |